# EUROPEAN PATENT SPECIFICATION

(11) **EP 3 249 482 B1**
(45) Date of publication and mention of the grant of the patent: **10.08.2022**
(21) Application number: 16171696.4
(22) Date of filing: 27.05.2016
(51) Int. Cl.: G05B 19/418, G05B 19/402, B64F 5/00

(54) **PRODUCTION SYSTEM FOR THE AUTOMATED ASSEMBLY OF VEHICLE COMPONENTS AND METHOD FOR CONTROLLING A PRODUCTION SYSTEM**
PRODUKTIONSSYSTEM ZUR AUTOMATISCHEN MONTAGE VON FAHRZEUGKOMPONENTEN UND VERFAHREN ZUR STEUERUNG EINES PRODUKTIONSSYSTEMS
SYSTÈME DE FABRICATION POUR LE MONTAGE AUTOMATISÉ DE COMPOSANTS DE VÉHICULE ET PROCÉDÉ POUR COMMANDER UN SYSTÈME DE PRODUCTION

(43) Date of publication of application: 29.11.2017
(73) Proprietor: Airbus Operations GmbH, 21129 Hamburg (DE); Cenit AG, 70565 Stuttgart (DE)
(72) Inventor: NEUHAUS, Frank, 21129 Hamburg (DE); SCHILDT, Rainer, 21129 Hamburg (DE); JUEDES, Wolfgang, 21129 Hamburg (DE); D'AGOSTINO, Nikolai, 70565 Stuttgart (DE)
(74) Representative: Isarpatent

(56) References cited:
- US-A1- 2012 130 528
- US-A1- 2014 157 588
- US-A1- 2015 344 154

## Description

The present invention pertains to a production system for the automated assembly of vehicle components and a method for controlling such a production system.

US 2015 / 344 154 A1, US 2014 / 157 588 A1, US 2012 / 130 528 A1 and EP 2 333 626 A2 disclose similar systems.

Although generally applicable to the assembly of any kind of vehicle or vehicle component, in particular large components of landborne, airborne, or waterborne vehicles, the present invention and the problem on which it is based will be explained in greater detail with reference to the fuselage assembly of commercial passenger aircraft.

The fuselage shell of a modern aircraft consists of metal or composite material, e.g. carbon fiber reinforced plastics (CFRP), formed as a rigid framework of stiffening elements that is covered by a skin. The framework normally comprises a series of frames bent into a circumferential direction according to the shape of the fuselage cross section and a plurality of longitudinal stringers or longerons that are joined to the frames. A typical fuselage shell is divided in the longitudinal direction into shell sections, each of which may individually be assembled from smaller shell portions. For example, a fuselage aft section of a fuselage shell may be assembled by circumferentially adjoining two side shell portions (including window openings), a lower shell portion and an upper shell portion to form a circumferential shell, and by closing off this circumferential shell in the aft direction with a single smaller tapering tail section.

The assembly of such shell sections or other large structural components, as for example passenger floors, cargo floors, etc., out of smaller shell portions is usually managed by positioning the individual aircraft components relative to each other within an iterative process using a plurality of positioner units that grip and move the aircraft components. To this end, the positioner units may be supported by an automated positioning system, which in turn may include a measurement system, e.g. a laser tracking system. However, the final control in this iterative process is commonly still in the hand of a human operator. For example, the human operator may have to intervene in the automatic positioning process in case one component leaves predefined system boundaries of the positioning system. Such system boundaries may for example be defined by the acceptable limits on the reaction forces on the aircraft components in the mounting points of the positioner units indicating the allowable residual stresses in the aircraft components. The assembly system may provide information on the reaction forces and the current positions of the aircraft components. Based on this information the operator may initiate, e.g. after an automatic stop due to exceedance of a reaction force limit, another positioning attempt following an alternative trajectory. As a consequence, there is a need for further automatizing the whole positioning process (cf., for example, US 2016/0074926 A1).

Against this background, it is one object of the present invention to find solutions for improving the automated assembly of large vehicle components.

This object is achieved by a production system having the features of claim 1 and a method for controlling a production system having the features of claim 6. According to a first aspect of the invention, a production system for the automated assembly of vehicle components comprises positioner units being configured to grip the respectively associated vehicle component at mounting points. The positioner units are further configured to move the respectively associated vehicle component into an assembly position. The production system further comprises a position-measurement system being configured to determine the assembly position of each vehicle component. The production system further comprises force sensors being configured to determine reaction forces and/or moments of each gripped vehicle component at the mounting points in the assembly position. The production system further comprises a computer-based control system being in data communication with the positioner units, the position-measurement system, and the force sensors. The computer-based control system is configured to control the positioner units based on the determined assembly positions and the determined reaction forces and/or moments of the vehicle components.

According to a second aspect of the invention, a method for controlling a production system for the automated assembly of vehicle components comprises gripping each vehicle component with respectively associated positioner units at mounting points. The method further comprises moving each vehicle component with the respectively associated positioner units into an assembly position. The method further comprises determining the assembly position of each vehicle component with a position-measurement system. The method further comprises determining reaction forces and/or moments of each gripped vehicle component with force sensors at the mounting points in the assembly position. The method further comprises communicating data between a computer-based control system and the positioner units, the position-measurement system, and the force sensors. The method further comprises controlling the positioner units by the computer-based control system based on the determined assembly positions and the determined reactions forces and/or moments of the vehicle components.

One idea of the present invention is to provide and improve an automated assembly of large vehicle components, in particular structural aircraft components, through networking between positioner units that are used to hold the vehicle components and bring them into an assembly position. In particular in aircraft construction, individual vehicle components with complex geometrical shapes may have to be carefully oriented in three-dimensional space with respect to each other, which puts high demands on the positioning process. The introduction of interactive networking between the production system components provides the advantage that the positioning process may be controlled and optimized by a computer-based system, which can relieve, complement, or even replace human operators conventionally involved in the production process. To achieve this, the present invention provides a production system, wherein the relevant system components are in data communication with a controlling computer system and, thus, also with each other. To this end, the production system components may have a certain level of information processing capabilities besides a certain bandwidth of data communication capabilities. To complement the positioner units, sensor systems are provided in data communication with the computer system such that the status of the positioner units and the gripped vehicle components may be determined at any point in time. As a result, the production system according to the invention forms a so-called cyber-physical production system, which is a production system composed of physical entities, i.e. a physical production system of sensors and positioner units and so on, controlled and monitored by a computer-based control system. Due to the data link between the physical entities and the computer system, advanced computer-based algorithms may be employed to control, regulate, steer, and/or optimize aspects of the assembly process.

The production system according to the invention provides a measurement system for determining the current position of the vehicle components in three-dimensional space, i.e. not only a three-dimensional coordinate of certain reference points is provided but also the orientation of the component within three-dimensional space is taken into account according to the invention. Reaction forces and/or moments of each gripped vehicle at their mounting points are assessed by force sensors and are communicated to the control system. The mechanical loads and stresses of each vehicle component may thus be analyzed at any point in time and based on this and the current position of the vehicle components the control system may prompt the positioner units to move the vehicle components. Like this, a self-optimizing, semi- or fully-autonomous assembly system may be fashioned even for the assembly of large and complex structural components of aircraft and/or spacecraft.

According to the invention, a vehicle component may be gripped and moved by one single positioner unit or by several such units in unison. For example, a large elongated fuselage portion of a passenger aircraft may be gripped by several positioner units arranged along the component's longitudinal axis. These positioner units are thus mechanically coupled through the vehicle component to be positioned. A single positioner unit may be provided with one or several gripping means, e.g. gripper arms or similar, and may thus grip and/or hold the vehicle components at several mounting points at the same time.

Advantageous embodiments and improvements of the present invention are found in the subordinate claims.

According to the invention, the computer based control-system comprises a multi-agent system including positioner agents. Each positioner unit may be actively linked to an associated positioner agent. The positioner agents may particularly be provided as software agents. Today, networking technology is widely available in industry. However, information processing capabilities of current production system components are rather limited with respect to computing power and data access to central or distributed sources as product model data and process planning data. Further, certain members in the processing chain may not have any data processing capabilities at all, e.g. product or vehicle components that need to be involved in the communication network of a production system. In order to resolve this lack, a digital representation of the production system may be provided in order to create a flexible communication channel between all relevant production system components through a digital representation. The digital representation is composed of virtual representatives of the relevant components of the physical production system. Each virtual production system component is linked to its physical counterpart in order to receive or send information to each other. In order to (self-)optimise the production process by exchanging and processing information, the communication and information processing may be performed in the digital representation. For that purpose, each virtual production system component may be represented as a software agent within a multi-agent system. Optionally, data access to databases may also be realized through the communication capabilities of the multi-agent system. Through the communication channel between the physical production system components and the virtual representation, information from the production system component (e.g. sensor values) may be considered for information processing in the linked agents. Actions processed by the agents may be initiated at the physical production system component through the data link as well. Communication between production system components is performed through communication between the agents. With this technical approach, even legacy production system components with limited data communication bandwidth and information processing capabilities may be transformed into a more sophisticated production system. In sum, the networking between the production system components and in particular between the positioner units may hence be realized through a digitized representation of the assembly system in the form of a multi-agent system.

The multi-agent system further comprises vehicle-component agents according to the invention. Each vehicle component may be passively linked to an associated vehicle-component agent. The vehicle-component agents may particularly be provided as software agents. Each vehicle component may be passively linked to the associated vehicle-component agent based on identification and configuration data of the respective vehicle component. To this end, identification and configuration data of each vehicle component may be read in by the system in situ, e.g. by means of a unique ID number via identification tags, e.g., Bar/QR tags, RFID tags, or the like. Based on the unique ID numbers, the identification and configuration data may be provided from a database, CAD-data (computer-aided design, CAD) or the like. In such an embodiment, even the vehicle-components themselves may be integrated into a software representation of the production system even without having any networking capabilities per se. The corresponding vehicle-component agent is thus passively linked to the vehicle component in the sense that the computer-based control system is not configured to actively control the vehicle component directly in any way but only indirectly via the positioner units. In contrast, the positioner units are actively linked to the positioner agents in the sense that the control system may actively control the positioner units via the positioner agents.

According to an embodiment of the invention, the force sensors may comprise load cells or similar being mounted to the positioner units. In one embodiment, the positioner units may for example be equipped with grippers and/or gripper arms, to which the loads cells may be coupled. Each load cell may create an electrical signal whose magnitude is proportional to the force or moment being measured. Different technologies may be used like piezoelectric, hydraulic, pneumatic load cells and so on. The load cells may provide information about forces and/or moments at the mounting points of the vehicle components at the positioner units, which in turn may be employed to correct the position and/or trajectory of one or several vehicle components within three-dimensional space. The force and moment data may be used locally for each associated positioner unit. Alternatively or additionally, the force and moment data may be used globally by exchanging these data in between the positioner units or by globally optimizing the vehicle component position taking into account several or all positioner units at the same time.

According to an embodiment of the invention, the position-measurement system may comprise a laser tracker or similar, e.g. a photogrammetry system or the like. Laser trackers or tracking interferometers are particularly suited for the assembly of large aircraft components as these instruments are able to precisely measure large objects over a distance of several meters with an accuracy in the submillimeter regime. To this end, a laser tracker may be set up on the ground several meters from the vehicle components with an unobstructed view on them.

According to an embodiment of the invention, the production system may be configured for the automated assembly of structural components of an aircraft or spacecraft. The method may thus be used to assemble structural components of an aircraft or spacecraft.

According to an embodiment of the invention, each positioner unit may be controlled according to a deviation of the determined assembly position of the respective vehicle component from a nominal assembly position of the respective vehicle component.

According to an embodiment of the invention, positioner units may be collectively controlled to minimize the deviations of the determined assembly positions of the vehicle components from the nominal assembly positions of the vehicle components. Hence, two or more positioner units may be collectively controlled. For example, two or more neighboring positioner units that together hold one large vehicle component may be controlled and steered in cooperation. However, in principle all positioner units of one or several assembly systems may be controlled and optimized jointly as a group. For example, two basically separated assembly systems may interact via the control system such that certain control algorithms optimized and trained on one of the two assembly systems may be utilized also for the other assembly system. It is one of the many advantages of the present invention that all positioner units are data linked to the control system such that the scheduling and execution of the control commands may be solely realized on a software basis within the control system. Thus, no additional or disproportionately high amount of extra effort is required in order to control all positioner units of one assembly system collectively.

According to an embodiment of the invention, the deviations may be minimized under consideration of the determined reaction forces and/or moments at the mounting points of the vehicle components. For example, the automated assembly of major aircraft components composed of CFRP causes certain challenges. Due to the production process of CFRP components, the accuracy of the geometrical shape may feature a wider tolerance band per se such that theoretical positioning data from CAD data or similar may not be sufficient to drive the assembly process. In order to make sure that the residual stresses in the assembled component stay well below certain limits, the positioning may be controlled in order to keep the reaction forces and torques at the mounting points below a certain limit. The final or nominal position of the assembled component may be an appropriate balance between reaction force and positioning accuracy.

According to an embodiment of the invention, the deviations may be minimized based on a neural network representing the behavior of each positioner unit. Using a neural network, the system may 'learn' from former positing activities by creating a self-learning behavioral model of the individual system components, which then may be used for subsequent or future positioning activities to make the appropriate manipulations automatically. The neural network may be trained, for example, based on the input data of an assembly system controlled by a human operator. Alternatively or additionally, the neural network may be trained based on test runs on the basis of predefined vehicle components. Neural networks offer many advantages particularly for complex assembly systems, e.g. involving major aircraft components made of un-isotropic material, as empirical approaches may be employed to determine an appropriate behavioral model. For the setup of a behavioral model based on a neural network, there is no need for an analytical understanding of the physical details involved. A detailed analytical understanding of the involved process may not be practical or not possible at all, as non-linear aspects may determine it. A neural network may however be adapted to such processes by taking the training on the basis of a number of data sets from former positioning activities or training data derived from pre-defined motion sequences. In order to define reusable behavioral models, it may be advantageous to classify the individual positioning situations based on gripping positions relative to the individual vehicle components. For example, the aircraft component may have a much higher local stiffness close to a door opening due to a higher amount of stiffening components (radial structural frames) than on other gripping positions where the aircraft component may be equipped only with axial oriented local stiffeners (stringers). A classified behavioral model with a neural network may be applied as a control instance to correct the nominal positioning trajectory based on the data that is generated during the positioning process, including reaction force vectors, reaction torque vectors, distance vectors between neighboring grippers, reaction force and torque vectors from neighboring grippers, and so on. Based on a suitable classification of positioning situations, behavioral models may be reused on similar positioning situations. Each positioning process could help to improve a suitable defined neural network for any subsequent positioning process up to a theoretical optimum. The classification of a positioning situation may depend on the capability of the positioner unit, e.g. the gripper arm, the gripping area, the degrees of freedom of the positioning unit, etc. Following such an approach, the positioning process may be represented by a control loop. The control component in the loop may be based on a neural network that represents the local system behavior at each individual positioning unit. The system behavior describes the non-linear relation between reaction force vectors, positional deviations, shape deviations, and deviations between nominal and actual gripping positions.

The invention will be explained in greater detail with reference to exemplary embodiments depicted in the drawings as appended.

The accompanying drawings provide a further understanding of the present invention.

The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

Fig. 1a, 1b schematically show perspective views of the assembly of a fuselage section of an exemplary aircraft (exploded view in Fig. 1a and assembled view in Fig. 1b).

Fig. 2 shows a flow diagram of a method for controlling a production system for the automated assembly of vehicle components according to an embodiment of the invention.

Fig. 3 schematically depicts a production system for the automated assembly of vehicle components according to an embodiment of the invention as it is used in Fig. 2.

Figs. 4a, 4b schematically show production systems for the automated assembly of vehicle components according to further embodiments of the invention.

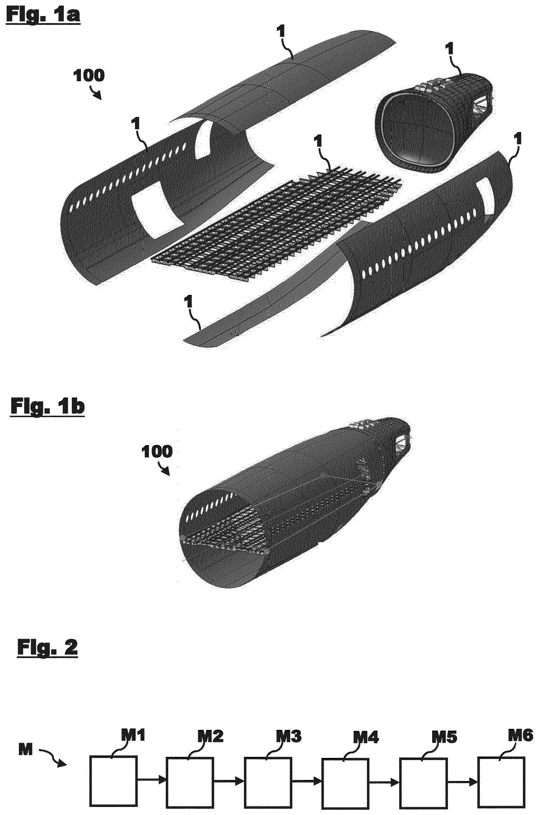

Figures 1a and 1b schematically show perspective views of the assembly of a fuselage section of an exemplary aircraft 100, e.g. a commercial passenger aircraft.

Specifically, Fig. 1a depicts a fuselage aft section of a fuselage shell of the aircraft 100 in exploded view. The fuselage aft section is assembled from a multitude of smaller vehicle components 1, e.g. made of metal, metal alloy, and/or composite material like CFRP or similar, comprising two side shell portions (including window and door openings), a lower shell portion, an upper shell portion, a passenger floor, and a tapering tail section. The shell portions are circumferentially adjoined around the passenger floor to form a circumferential shell, which is then closed off in the aft direction with the tapering tail section. The assembly of these vehicle components 1 is shown in Fig. 1b. The assembly process may be executed by methods and production systems according to embodiments of the invention as they will be described in the following. It will be clear to the person of skill however that the method and production system according to the invention may be used to assemble and manufacture many other types of vehicles or vehicle components that differ in shape or configuration from the depicted examples. For illustration purposes only, Figs. 1-4 address the assembly of a passenger aircraft fuselage aft section. In principle, the embodiments of the method and the production system, as they will be described in the following, may be used not only for the assembly of passenger aircraft or sections of passenger aircraft, but also in general applications within the transport industry, e.g. in landborne, waterborne or airborne vehicles. However, the embodiments of the invention described herein are particularly advantageous for the assembly of large vehicle components 1, in particular structural components of aircraft 100.

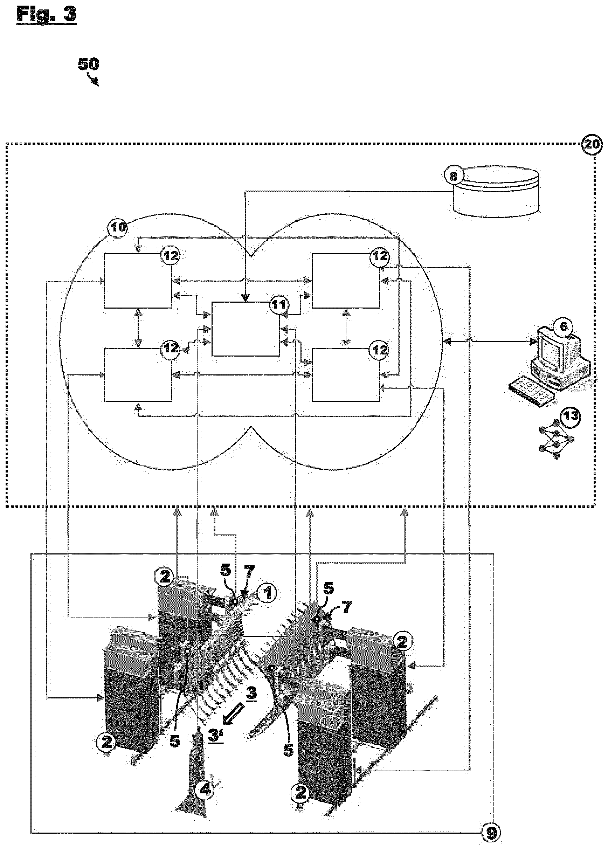

Fig. 2 shows a flow diagram of a method M for controlling a production system 50 for the automated assembly of vehicle components 1 according an embodiment of the invention. Fig. 3 depicts a production system 50, as it is used in the method M of Fig. 2, for the automated assembly of vehicle components 1 according to an embodiment of the invention. The method M comprises under M1 gripping each vehicle component 1 with respectively associated positioner units 2 at mounting points 7. For this purpose, each positioner unit 2 is equipped with one or several gripper arms or similar, with which the positioner unit 2 may attach to the vehicle component 1 at a certain mounting point 7 such that the vehicle component 1 may be processed further. A vehicle component 1 may be gripped by one single positioner unit 2 or by several positioner units 2. In the exemplary depiction in Fig. 3, two vehicle components 1 are shown, each of which represents a fuselage side portion of a passenger aircraft, e.g. as the one shown in Figs. 1a, 1b. Each side portion is gripped by two positioner units 2 arranged along the component's longitudinal axis, so that the positioner units 2 are mechanically coupled via the side portion to be positioned. However, the person of skill will readily acknowledge that many other variations of the arrangement depicted in Fig. 3 are included in the present invention. For example, each vehicle component 1 may equally well be gripped by one single positioner unit 2 or more than two positioner units 2. Each positioner unit 2 may be provided with one or several gripping means, e.g. gripped arms or similar, and may thus grip and/or hold the vehicle components 1 at several mounting points 7 at the same time.

Still referring to Figs. 2 and 3, the method M further comprises under M2 moving each vehicle component 1 with the respectively associated positioner units 2 into an assembly position 3. To this end, the positioner units 2 may, for example, be mounted on rails that allow to move them into a specific direction. Furthermore, the gripping means of the positioner units 2 may be configured to move into different spatial directions to change the position as well as the orientation, the inclinations, etc., of the vehicle component 1. Like this, the vehicle components 1 may be moved from one assembly position 3 into another assembly position 3', which may be for example a nominal assembly position 3'.

As a further step, the method M comprises under M3 determining the assembly position 3 of each vehicle component 1 with a position-measurement system 4. The position-measurement system 4 may be, for example, a laser tracker or similar tracking interferometer, a photogrammetry system or any other measurement system suited for the use case at hand, i.e. in this case the assembly of large aircraft components. The method M further comprises under M4 determining reaction forces and/or moments of each gripped vehicle component 1 with force sensors 5 at the mounting points 7 in the assembly position 3. The force sensors 5 may mounted on the positioner units 2 next to the mounting points 7 and may be coupled to the grippers or gripper arms. The force sensors 5 may comprise piezoelectric, hydraulic, pneumatic, or mechanical load cells or other suitable means that are able to provide a signal whose magnitude is proportional to the force or moment being measured. The load cells provide information about forces and/or moments at the mounting points 7 of the vehicle components 1 at the positioner units 2. The respective reaction force and moment data can then be used to correct the position and/or trajectory of one or several vehicle components within the spatial dimensions. The force and moment data may be used locally for each associated positioner unit 2 and/or globally by taking into account the respective data of adjacent positioner units 2 or, for example, all other positioner units 2.

The positioner units 2, the position-measurement system 4, the force sensors 5, the vehicle components 1, and so on, form a physical production system 9. The physical production system 9 is embedded into and controlled by a computer-based control system 20. Correspondingly, the method M further comprises under M5 communicating data between the computer-based control system 20 and the positioner units 2, the position-measurement system 4, and the force sensors 5. The data exchange itself is illustrated in Fig. 3 by arrows connecting the individual components of the physical production system 9 with the computer-based control system 20. The connection itself may be wireless or cable-based or may rely on any other suitable network and data-exchange technology. The physical production system 9 and the computer-based control system 20 together form a production system 50 in the form of a cyber-physical production system, i.e. a system composed of physical entities, which are controlled and monitored by a computer-based system on basis of computer algorithms. More specifically, the computer-based control system 20 may include a software-based multi-agent system 10 with multiple software agents that interact with corresponding entities in the physical environment. The multi-agent system 10 serves as a digital representation of the physical production system 9. In particular, the multi-agent system 10 of this embodiment includes software positioner agents 12, each of which is actively linked to an associated positioner unit 2. The positioner agents 12 and the positioner units 2 are actively linked in the sense that the computer-based control system 20 may actively control the positioner units 2 via the positioner agents 12 and the positioner units 2 in turn may interact with the computer-based control system 20. For this purpose, the positioner units 2 may have a certain level of information processing capabilities besides a certain bandwidth of data communication capabilities. The multi-agent system 10 further comprises vehicle-component agents 11, each vehicle component 1 being passively linked to an associated vehicle-component agent 11. The vehicle components 1, in particular in case of structural aircraft components, usually do not have any networking or data processing capabilities. In order to include these components into the digital representation of the physical production system 9, i.e. the multi-agent system 10, each vehicle component 1 may be passively linked to the associated vehicle-component agent 11 based on identification and configuration data of the respective vehicle component 1, e.g. an identification number or CAD-data. For example, a specific vehicle component 1 may be identified by means of an identification tag (e.g. Bar/QR - Code tags or RFID tags) providing a unique ID number.. With this unique ID number, relevant product and configuration data may be assigned to this particular vehicle component 1, which then defines the associated vehicle-component agent 11 used in the digital representation of the multi-agent system 10. For this purpose, the computer-based control system 20 may be connected to a respective database 8 or the like. The vehicle component 1 is hence passively linked to the associated vehicle-component agent 11 in the sense that the vehicle component 1 cannot be actively controlled by the computer-based control system 20, neither can it communicate directly with the system. However, the vehicle component 1 may be controlled by the computer-based control system 20 indirectly via the positioner units 2, which are connected to the respective positioner agents 12.

Specifically, the method M further comprises under M6 controlling the positioner units 2 by the computer-based control system 20 based on the determined assembly positions 3 and the determined reactions forces and/or moments of the vehicle components 1. More specifically, each positioner unit 2 may be controlled according to a deviation of the determined assembly position 3 of the respective vehicle component 1 from a nominal assembly position 3' of the respective vehicle component 1. Furthermore, several or all positioner units 2 may be collectively controlled to minimize and/or otherwise optimize the deviations of the determined assembly positions 3 of the vehicle components 1 from the nominal assembly positions 3' of the vehicle components 1. In particular, the deviations may be minimized and/or optimized under consideration of the determined reaction forces and/or moments at the mounting points 7 of the vehicle components 1. For this the computer-based control system 20 may include or be connected to a simulation model 6, e.g. based on neural networks 13 that may, for example, represent the behavior of each positioner unit 2.

The improved automated assembly system according to the invention is based amongst others on the following features: automated assembly optimization through networking between positioner units 2 within a production system 50; realization of networking between positioner units through a digitized representation of the physical production system 9 in the form of a multi-agent system 10; and assembly optimization via a machine learning process or simulation model, in particular a neural network 13. In conventional assembly or production systems, the decisions for manipulating the positioning process are to a large extend still handled by a human operator. The present invention follows the new approach to let the system "learn" from former positing activities by creating a self-learning behavioral model of individual positioning system components. This behavioral model of the system components can be used for future positioning activities to make the right manipulations automatically. Advance computer algorithms can be utilized within the digital representation of the physical production system 9.

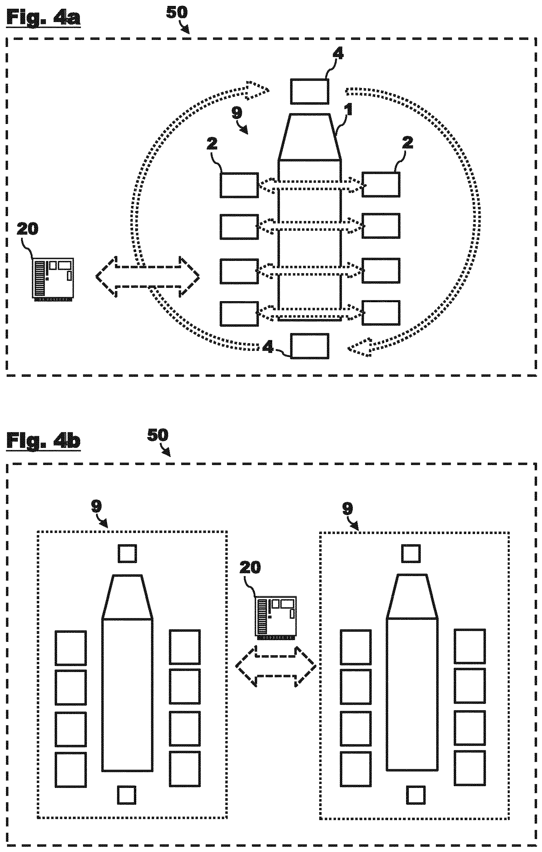

Various modifications and variants of the present invention will be clear to the person of skill. Two examples are given in Figs. 4a and 4b, which schematically show production systems 50 for the automated assembly of vehicle components 1 according to further embodiments of the invention. Fig. 4a shows a single assembly system with one physical production system 9 including a position-measurement system 4 and positioner units 2, which are controlled by a computer-based control system 20. The position-measurement system 4 and the positioner units 2 interact with each other and with the computer-based control system 20. Based on dedicated machine learning algorithms run on the computer-based control system 20, the production system 50 may learn about the assembly process and optimize the positioning process based on this. Fig. 4b depicts an extended example of this. Here, two physical production systems 9 (e.g. each of them configured as the one in Fig. 4a) are connected with each other and are controlled jointly via the computer-based control system 20. In principle, the individual components of both physical production systems 9 may exchange data directly with each other. Thus, both assembly stations may learn together or individually about the assembly process and optimize the positioning process accordingly.

### List of reference signs

- 1: vehicle component
- 2: positioner unit
- 3: assembly position
- 3': nominal assembly position
- 4: position-measurement system
- 5: force sensor
- 6: simulation model
- 7: mounting point
- 8: database
- 9: physical production system
- 10: multi-agent system
- 11: vehicle-component agent
- 12: positioner agent
- 13: neural network
- 20: computer-based control system
- 50: production system
- 100: aircraft
- M: method
- M1: method step
- M2: method step
- M3: method step
- M4: method step
- M5: method step
- M6: method step

## Claims

1. Production system (50) for the automated assembly of vehicle components (1), comprising:
positioner units (2) being configured to grip the respectively associated vehicle component (1) at mounting points (7) and move the respectively associated vehicle component (1) into an assembly position (3);
a position-measurement system (4) being configured to determine the assembly position (3) of each vehicle component (1);
force sensors (5) being configured to determine reaction forces and/or moments of each gripped vehicle component (1) at the mounting points (7) in the assembly position (3); and
a computer-based control system (20) being in data communication with the positioner units (2), the position-measurement system (4), and the force sensors (5), and being configured to control the positioner units (2) based on the determined assembly positions (3), including the orientation of the vehicle component (1) within three-dimensional space, and the determined reaction forces and/or moments of the vehicle components (1);
wherein the computer based control-system (20) comprises a multi-agent system (10) including positioner agents (12), each positioner agent (12) being a virtual representative of an associated positioner unit (2), which is the physical counterpart of the respective positioner agent (12), the positioner agents (12) being in communication with each other within the multi-agent system (10), the computer based-control system (20) being configured to actively control each positioner unit (2) via the associated positioner agent (12); and
wherein the multi-agent system (10) further comprises vehicle-component agents (11), each vehicle-component agent (11) being a virtual representative of an associated vehicle component (1), the vehicle-component agents (11) being in communication with the positioner agents (12) within the multi-agent system (10), the computer based-control system (20) being configured to control each vehicle component (1) indirectly via the positioner units (2).

2. Production system (50) according to claim 1, wherein each vehicle component (1) is linked to the associated vehicle-component agent (11) based on identification and configuration data of the respective vehicle component (1).

3. Production system (50) according to one of the preceding claims, wherein the force sensors (5) comprise load cells being mounted to the positioner units (2).

4. Production system (50) according to one of the preceding claims, wherein the position-measurement system (4) comprises a laser tracker.

5. Production system (50) according to one of the preceding claims, wherein the production system (50) is configured for the automated assembly of structural components of an aircraft or spacecraft (100).

6. Method (M) for controlling a production system (50) for the automated assembly of vehicle components (1), comprising:
gripping (M1) each vehicle component (1) with respectively associated positioner units (2) at mounting points (7);
moving (M2) each vehicle component (1) with the respectively associated positioner units (2) into an assembly position (3);
determining (M3) the assembly position (3) of each vehicle component (1) with a position-measurement system (4);
determining (M4) reaction forces and/or moments of each gripped vehicle component (1) with force sensors (5) at the mounting points (7) in the assembly position (3);
communicating (M5) data between a computer-based control system (20) and the positioner units (2), the position-measurement system (4), and the force sensors (5); and
controlling (M6) the positioner units (2) by the computer-based control system (20) based on the determined assembly positions (3), including the orientation of the vehicle component (1) within three-dimensional space, and
the determined reactions forces and/or moments of the vehicle components (1);
wherein the computer based control-system (20) comprises a multi-agent system (10) including positioner agents (12), each positioner agent (12) being a virtual representative of an associated positioner unit (2), which is the physical counterpart of the respective positioner agent (12), the positioner agents (12) communicating with each other within the multi-agent system (10), the computer based-control system (20) actively controlling each positioner unit (2) via the associated positioner agent (12); and
wherein the multi-agent system (10) further comprises vehicle-component agents (11), each vehicle-component agent (11) being a virtual representative of an associated vehicle component (1), the vehicle-component agents (11) communicating with the positioner agents (12) within the multi-agent system (10), the computer based-control system (20) controlling each vehicle component (1) indirectly via the positioner units (2).

7. Method (M) according to claim 6, wherein each positioner unit (2) is controlled according to a deviation of the determined assembly position (3) of the respective vehicle component (1) from a nominal assembly position (3') of the respective vehicle component (1).

8. Method (M) according to one of the claims 6 to 7, wherein positioner units (2) are collectively controlled to minimize the deviations of the determined assembly positions (3) of the vehicle components (1) from the nominal assembly positions (3') of the vehicle components (1).

9. Method (M) according to one of the claims 6 to 8, wherein the deviations are minimized under consideration of the determined reaction forces and/or moments at the mounting points (7) of the vehicle components (1).

10. Method (M) according to one of the claims 6 to 9, wherein the deviations are minimized based on a neural network (13) representing the physical behavior of the vehicle components (1) and the positioner units (2).

11. Method (M) according to claim 10, wherein the neural network (13) is adapted by taking the training on the basis of a number of data sets from former positioning activities or training data derived from pre-defined motion sequences.

12. Method (M) according to one of the claims 6 to 11, wherein the method (M) is used to assemble structural components of an aircraft or spacecraft (100).

## Patentansprüche

1. Produktionssystem (50) für den automatisierten Einbau von Fahrzeugkomponenten (1), umfassend:
Positionierereinheiten (2), die dazu konfiguriert sind, die jeweils zugeordnete Fahrzeugkomponente (1) an Montagepunkten (7) zu ergreifen und die jeweils zugeordnete Fahrzeugkomponente (1) in eine Einbauposition (3) zu bewegen;
ein Positionsmesssystem (4), das dazu konfiguriert ist, die Einbauposition (3) jeder Fahrzeugkomponente (1) zu bestimmen;
Kraftsensoren (5), die dazu konfiguriert sind, Reaktionskräfte und/oder -momente jeder ergriffenen Fahrzeugkomponente (1) an den Montagepunkten (7) in der Einbauposition (3) zu bestimmen; und
ein computerbasiertes Steuersystem (20), das in Datenkommunikation mit den Positionierereinheiten (2), dem Positionsmesssystem (4) und den Kraftsensoren (5) ist und dazu konfiguriert ist, die Positionierereinheiten (2) basierend auf den bestimmten Einbaupositionen (3), einschließlich der Ausrichtung der Fahrzeugkomponente (1) im dreidimensionalen Raum, und den bestimmten Reaktionskräften und/oder -momenten der Fahrzeugkomponenten (1) zu steuern;
wobei das computerbasierte Steuersystem (20) ein Multiagentensystem (10) umfasst, das Positioniereragenten (12) umfasst, wobei jeder Positioniereragent (12) eine zugeordnete Positionierereinheit (2), die das physische Gegenstück des jeweiligen Positioniereragenten (12) ist, virtuell repräsentiert, wobei die Positioniereragenten (12) innerhalb des Multiagentensystems (10) in Kommunikation miteinander stehen, wobei das computerbasierte Steuersystem (20) dazu konfiguriert ist, jede Positionierereinheit (2) über den zugeordneten Positioniereragenten (12) aktiv zu steuern; und
wobei das Multiagentensystem (10) ferner Fahrzeugkomponentenagenten (11) umfasst, wobei jeder Fahrzeugkomponentenagent (11) eine zugeordnete Fahrzeugkomponente (1) virtuell repräsentiert, wobei die Fahrzeugkomponentenagenten (11) innerhalb des Multiagentensystems (10) in Kommunikation mit den Positioniereragenten (12) stehen, wobei das computerbasierte Steuersystem (20) dazu konfiguriert ist, jede Fahrzeugkomponente (1) indirekt über die Positionierereinheiten (2) zu steuern.

2. Produktionssystem (50) nach Anspruch 1, wobei jede Fahrzeugkomponente (1) mit dem zugeordneten Fahrzeugkomponentenagenten (11) basierend auf Identifikations- und Konfigurationsdaten der jeweiligen Fahrzeugkomponente (1) verknüpft ist.

3. Produktionssystem (50) nach einem der vorhergehenden Ansprüche, wobei die Kraftsensoren (5) Lastzellen umfassen, die an den Positionierereinheiten (2) montiert sind.

4. Produktionssystem (50) nach einem der vorhergehenden Ansprüche, wobei das Positionsmesssystem (4) einen Lasernachführer umfasst.

5. Produktionssystem (50) nach einem der vorhergehenden Ansprüche, wobei das Produktionssystem (50) für den automatisierten Einbau von Strukturkomponenten eines Luftfahrzeugs oder Raumfahrzeugs (100) konfiguriert ist.

6. Verfahren (M) zum Steuern eines Produktionssystems (50) für den automatisierten Einbau von Fahrzeugkomponenten (1), umfassend:
Ergreifen (M1) jeder Fahrzeugkomponente (1) mit jeweiligen zugeordneten Positionierereinheiten (2) an Montagepunkten (7);
Bewegen (M2) jeder Fahrzeugkomponente (1) mit den jeweiligen zugeordneten Positionierereinheiten (2) in eine Einbauposition (3);
Bestimmen (M3) der Einbauposition (3) jeder Fahrzeugkomponente (1) mit einem Positionsmesssystem (4) ;
Bestimmen (M4) von Reaktionskräften und/oder -momenten jeder ergriffenen Fahrzeugkomponente (1) mit Kraftsensoren (5) an den Montagepunkten (7) in der Einbauposition (3);
Kommunizieren (M5) von Daten zwischen einem computerbasierten Steuersystem (20) und den Positionierereinheiten (2), dem Positionsmesssystem (4) und den Kraftsensoren (5); und
Steuern (M6) der Positionierereinheiten (2) durch das computerbasierte Steuersystem (20) basierend auf den bestimmten Einbaupositionen (3), einschließlich der Ausrichtung der Fahrzeugkomponente (1) im dreidimensionalen Raum, und den bestimmten Reaktionskräften und/oder -momenten der Fahrzeugkomponenten (1);
wobei das computerbasierte Steuersystem (20) ein Multiagentensystem (10) umfasst, das Positioniereragenten (12) umfasst, wobei jeder Positioniereragent (12) eine zugeordnete Positionierereinheit (2), die das physische Gegenstück des jeweiligen Positioniereragenten (12) ist, virtuell repräsentiert, wobei die Positioniereragenten (12) innerhalb des Multiagentensystems (10) miteinander kommunizieren, wobei das computerbasierte Steuersystem (20) jede Positionierereinheit (2) über den zugeordneten Positioniereragenten (12) aktiv steuert; und
wobei das Multiagentensystem (10) ferner Fahrzeugkomponentenagenten (11) umfasst, wobei jeder Fahrzeugkomponentenagent (11) eine zugeordnete Fahrzeugkomponente (1) virtuell repräsentiert, wobei die Fahrzeugkomponentenagenten (11) innerhalb des Multiagentensystems (10) mit den Positioniereragenten (12) kommunizieren, wobei das computerbasierte Steuersystem (20) jede Fahrzeugkomponente (1) indirekt über die Positionierereinheiten (2) steuert.

7. Verfahren (M) nach Anspruch 6, wobei jede Positionierereinheit (2) gemäß einer Abweichung der bestimmten Einbauposition (3) der jeweiligen Fahrzeugkomponente (1) von einer Nenneinbauposition (3') der jeweiligen Fahrzeugkomponente (1) gesteuert wird.

8. Verfahren (M) nach einem der Ansprüche 6 bis 7, wobei die Positionierereinheiten (2) gemeinsam gesteuert werden, um die Abweichungen der bestimmten Einbaupositionen (3) der Fahrzeugkomponenten (1) von den Nenneinbaupositionen (3') der Fahrzeugkomponenten (1) zu minimieren.

9. Verfahren (M) nach einem der Ansprüche 6 bis 8, wobei die Abweichungen unter Berücksichtigung der bestimmten Reaktionskräfte und/oder -momente an den Montagepunkten (7) der Fahrzeugkomponenten (1) minimiert werden.

10. Verfahren (M) nach einem der Ansprüche 6 bis 9, wobei die Abweichungen basierend auf einem neuronalen Netzwerk (13) minimiert werden, welches das physische Verhalten der Fahrzeugkomponenten (1) und der Positionierereinheiten (2) repräsentiert.

11. Verfahren (M) nach Anspruch 10, wobei das neuronale Netzwerk (13) durch Vornehmen des Trainings auf der Basis einer Anzahl von Datensätzen aus vorherigen Positionierungsaktivitäten oder Trainingsdaten, die aus vordefinierten Bewegungssequenzen abgeleitet werden, adaptiert wird.

12. Verfahren (M) nach einem der Ansprüche 6 bis 11, wobei das Verfahren (M) verwendet wird, um Strukturkomponenten eines Luftfahrzeugs oder Raumfahrzeugs (100) einzubauen.

## Revendications

1. Système de production (50) pour l'assemblage automatisé de composants de véhicule (1), comprenant :
des unités de positionnement (2) configurées pour saisir le composant de véhicule (1) respectivement associé au niveau de points de montage (7) et déplacer le composant de véhicule (1) respectivement associé dans une position d'assemblage (3) ;
un système de mesure de position (4) configuré pour déterminer la position d'assemblage (3) de chaque composant de véhicule (1) ;
des capteurs de force (5) configurés pour déterminer des moments et/ou des forces de réaction de chaque composant de véhicule (1) saisi au niveau des points de montage (7) dans la position d'assemblage (3) ; et
un système de commande informatisé (20) en communication de données avec les unités de positionnement (2), le système de mesure de position (4) et les capteurs de force (5), et configuré pour commander les unités de positionnement (2) sur la base des positions d'assemblage déterminées (3), y compris l'orientation du composant de véhicule (1) à l'intérieur d'un espace tridimensionnel, et des moments et/ou des forces de réaction déterminés des composants de véhicule (1) ;
le système de commande informatisé (20) comprenant un système à agents multiples (10) incluant des agents de positionnement (12), chaque agent de positionnement (12) étant un représentant virtuel d'une unité de positionnement (2) associée, qui est la contrepartie physique de l'agent de positionnement (12) respectif,
les agents de positionnement (12) étant en communication l'un avec l'autre à l'intérieur du système à agents multiples (10), le système de commande informatisé (20) étant configuré pour commander activement chaque unité de positionnement (2) par l'intermédiaire de l'agent de positionnement (12) associé ; et
le système à agents multiples (10) comprenant en outre des agents de composant de véhicule (11), chaque agent de composant de véhicule (11) étant un représentant virtuel d'un composant de véhicule (1) associé, les agents de composant de véhicule (11) étant en communication avec les agents de positionnement (12) à l'intérieur du système à agents multiples (10), le système de commande informatisé (20) étant configuré pour commander chaque composant de véhicule (1) indirectement par l'intermédiaire des unités de positionnement (2).

2. Système de production (50) selon la revendication 1, dans lequel chaque composant de véhicule (1) est relié à l'agent de composant de véhicule (11) associé sur la base de données d'identification et de configuration du composant de véhicule (1) respectif.

3. Système de production (50) selon l'une des revendications précédentes, dans lequel les capteurs de force (5) comprennent des cellules de charge montées sur les unités de positionnement (2).

4. Système de production (50) selon l'une des revendications précédentes, dans lequel le système de mesure de position (4) comprend un suiveur laser.

5. Système de production (50) selon l'une des revendications précédentes, le système de production (50) étant configuré pour l'assemblage automatisé de composants structurels d'un aéronef ou d'un engin spatial (100).

6. Procédé (M) pour commander un système de production (50) pour l'assemblage automatisé de composants de véhicule (1), comprenant :
le fait de saisir (M1) chaque composant de véhicule (1) avec des unités de positionnement (2) respectivement associées au niveau de points de montage (7) ;
le déplacement (M2) de chaque composant de véhicule (1) avec les unités de positionnement (2) respectivement associées dans une position d'assemblage (3) ;
le fait de déterminer (M3) la position d'assemblage (3) de chaque composant de véhicule (1) avec un système de mesure de position (4) ;
la détermination (M4) de moments et/ou de forces de réaction de chaque composant de véhicule (1) saisi avec des capteurs de force (5) au niveau des points de montage (7) dans la position d'assemblage (3) ;
la communication (M5) de données entre un système de commande informatisé (20) et les unités de positionnement (2), le système de mesure de position (4), et les capteurs de force (5) ; et
le fait de commander (M6) les unités de positionnement (2) par le système de commande informatisé (20) sur la base des positions d'assemblage déterminées (3), y compris l'orientation du composant de véhicule (1) à l'intérieur d'un espace tridimensionnel, et des moments et/ou des forces de réactions déterminés des composants de véhicule (1) ;
le système de commande informatisé (20) comprenant un système à agents multiples (10) incluant des agents de positionnement (12), chaque agent de positionnement (12) étant un représentant virtuel d'une unité de positionnement (2) associée, qui est la contrepartie physique de l'agent de positionnement (12) respectif,
les agents de positionnement (12) communiquant l'un avec l'autre à l'intérieur du système à agents multiples (10), le système de commande informatisé (20) commandant activement chaque unité de positionnement (2) par l'intermédiaire de l'agent de positionnement (12) associé ; et
le système à agents multiples (10) comprenant en outre des agents de composant de véhicule (11), chaque agent de composant de véhicule (11) étant un représentant virtuel d'un composant de véhicule (1) associé, les agents de composant de véhicule (11) communiquant avec les agents de positionnement (12) à l'intérieur du système à agents multiples (10), le système de commande informatisé (20) commandant chaque composant de véhicule (1) indirectement par l'intermédiaire des unités de positionnement (2).

7. Procédé (M) selon la revendication 6, dans lequel chaque unité de positionnement (2) est commandée en fonction d'une déviation de la position d'assemblage déterminée (3) du composant de véhicule (1) respectif par rapport à une position d'assemblage nominale (3') du composant de véhicule (1) respectif.

8. Procédé (M) selon l'une des revendications 6 à 7, dans lequel des unités de positionnement (2) sont commandées collectivement pour minimiser les déviations des positions d'assemblage déterminées (3) des composants de véhicule (1) relativement à des positions d'assemblage nominales (3') des composants de véhicule (1) .

9. Procédé (M) selon l'une des revendications 6 à 8, dans lequel les déviations sont minimisées en tenant compte des moments et/ou des forces de réaction déterminés au niveau des points de montage (7) des composants de véhicule (1).

10. Procédé (M) selon l'une des revendications 6 à 9, dans lequel les déviations sont minimisées sur la base d'un réseau neuronal (13) représentant le comportement physique des composants de véhicule (1) et des unités de positionnement (2).

11. Procédé (M) selon la revendication 10, dans lequel le réseau neuronal (13) est adapté en prenant l'apprentissage sur la base d'un nombre d'ensembles de données provenant d'activités de positionnement antérieures ou de données d'apprentissage dérivées de séquences de mouvement prédéfinies.

12. Procédé (M) selon l'une des revendications 6 à 11, le procédé (M) étant utilisé pour assembler des composants structurels d'un aéronef ou d'un engin spatial (100).
